(19) Europäisches Patentamt
European Patent Office
Office européen des brevets

(11) **EP 4 641 881 A1**

(12) **EUROPÄISCHE PATENTANMELDUNG**

(43) Veröffentlichungstag:
**29.10.2025 Patentblatt 2025/44**

(21) Anmeldenummer: **24171879.0**

(22) Anmeldetag: **23.04.2024**

(51) Internationale Patentklassifikation (IPC):
***H02J 13/00*** *(2006.01)*

(52) Gemeinsame Patentklassifikation (CPC):
**H02J 13/00002;** H02J 2203/10; H02J 2203/20;
H02J 2213/00

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **SCHÜTZ, Thomas**
  **90765 Fürth (DE)**
• **MAUGER, Xavier**
  **75014 Paris (FR)**

(74) Vertreter: **Siemens Patent Attorneys**
**Postfach 22 16 34**
**80506 München (DE)**

(54) **VERFAHREN ZUM BESTIMMEN EINER NETZWERKTOPOLOGIE FÜR ELEKTRISCHE KOMPONENTEN IN EINEM ELEKTRISCHEN NETZWERK MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(57)    Die Erfindung betrifft ein Verfahren zum Bestimmen einer Netzwerktopologie (12) für elektrische Komponenten (14, 16, 18, 20, 22, 40, 42) in einem elektrischen Netzwerk (24) mittels einer elektronischen Recheneinrichtung (10), mit den Schritten Empfangen einer jeweiligen elektrischen Entropie an jeweiligen Erfassungseinrichtungen (26, 28, 30, 32, 34, 36, 38) im elektrischen Netzwerk (24) über eine Vielzahl von Zeitschritten; Korrelieren von jeweiligen Erfassungseinrichtungen (26, 28, 30, 32, 34, 36, 38) in Abhängigkeit von den Entropien über die Vielzahl von Zeitschritten; Bestimmen von Abhängigkeiten der Erfassungseinrichtungen (26, 28, 30, 32, 34, 36, 38) zueinander in Abhängigkeit von der Korrelation; und Bestimmen von zumindest einer Netzwerktopologie (12) in Abhängigkeit von den bestimmten Abhängigkeiten. Ferner betrifft die Erfindung ein Computerprogrammprodukt, ein computerlesbares Speichermedium sowie eine elektronische Recheneinrichtung (10).

FIG 1

EP 4 641 881 A1

**Beschreibung**

Die Erfindung betrifft ein Verfahren zum Bestimmen einer Netzwerktopologie für elektrische Komponenten in einem elektrischen Netzwerk mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Gemäß dem Stand der Technik wird erwartet, dass datengesteuerte Dienstleistungen, wie Energiemanagementsysteme, vorausschauende Wartungssysteme und Fehlererkennungssysteme, einen wachsenden Zukunftsmarkt darstellen, der erhebliche Vorteile für ein bestimmtes Energiesystem bietet. Eines der Haupthindernisse für eine weit verbreitete Nutzung solcher Dienste sind die hohen Kosten für die Inbetriebnahme, wobei die Inbetriebnahme insbesondere in der Regel manuelle Schritte, die arbeitsintensiv und fehleranfällig sind, umfasst. Einer dieser Schritte ist die Identifizierung der Netzwerktopologie von insbesondere Energiesystemen.

Die Topologieerkennung zielt insbesondere darauf ab, die entsprechenden Verbindungen zwischen den installierten Messgeräten und den zugehörigen Anlagen zu identifizieren.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen verbessert eine Netzwerktopologie für elektrische Komponenten in einem elektrischen Netzwerk bestimmt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Netzwerktopologie für elektrische Komponenten in einem elektrischen Netzwerk mittels einer elektronischen Recheneinrichtung. Es werden jeweilige elektrische Entropien an jeweiligen Erfassungseinrichtungen im elektrischen Netzwerk über eine Vielzahl von Zeitschritten empfangen. Davor findet insbesondere ein normaler Zeitreihenschritt statt, wobei anschließend insbesondere in einem Pre-Processing-Schritt die entsprechende Entropie bestimmt wird, um insbesondere konstante Zeitreihen aus der Betrachtung zu nehmen. Insbesondere werden somit elektrische Messwerte, insbesondere Wirkleistungen, empfangen, und anschließend werden diese auf Basis der Entropie (nicht thermodynamisch, sondern informationstechnisch) untersucht, ob sie einen Mehrwert liefern. Mit anderen Worten werden nur indirekt Entropien empfangen, da insbesondere die Messwerte empfangen werden und auf Basis der Messwerte die Entropien bestimmt werden können. In einem weiteren Schritt erfolgt dann das Korrelieren von jeweiligen Erfassungseinrichtungen in Abhängigkeit von den Entropien über die Vielzahl von Zeitschritten. Ferner werden Abhängigkeiten der Erfassungseinrichtungen zueinander in Abhängigkeit von der Korrelation bestimmt, und es erfolgt ein Bestimmen von zumindest einer Netzwerktopologie in Abhängigkeit von den bestimmten Abhängigkeiten.

Somit kann auf einfache Art und Weise, nämlich auf Basis der Messwerte bzw. der elektrischen Entropien, eine Netzwerktopologie der elektrischen Komponenten innerhalb des Netzwerks bestimmt werden. Insbesondere kann dies automatisiert erfolgen, ohne eine manuelle Implementierung der Netzwerktopologie durchführen zu müssen. Somit kann automatisiert und auf einfache Art und Weise die Netzwerktopologie bestimmt werden.

Insbesondere beschreibt somit die vorliegende Erfindung einen deterministischen Algorithmus, der die Netzwerktopologie eines Energiesystems auf der Grundlage zuvor gemessener Zeitreihen identifiziert.

Mit anderen Worten ist ein Verfahren vorgeschlagen, das als Eingabe beispielsweise Wirkleistungszeitreihen für eine Erfassungseinrichtung aufnimmt und diese an die elektronische Recheneinrichtung liefert. Es kann dann ein Graph ermittelt werden, der beispielsweise ein Stromnetz beschreibt. Dabei können insbesondere sogenannte Knoten Geräte sein und Kanten entsprechende Leitungen. Darüber hinaus kann der Graph nützliche Zusatzinformationen, wie zum Beispiel ein Vertrauensniveau in die Vorhersage jedes Knotens sowie, ob die Topologie das Kirchhoffsche Gesetz und somit die Energiebilanz des Stromnetzes respektiert.

Insbesondere wird somit iterativ beziehungsweise schrittweise die Netzwerktopologie als Graph aufgebaut, insbesondere ausgehend von einer bekannten Hauptwurzel, welche beispielsweise einer Haupterfassungseinrichtung beziehungsweise einem Hauptzähler entspricht, bis alle Knoten mit dem Graphen verbunden sind. Bei jedem Zeitschritt wird eine neue Verbindung hergestellt, das heißt ein neuer Knoten wird den Achsen in dem Graphen hinzugefügt. Zunächst werden offensichtliche Verbindungen identifiziert, und nach und nach werden schwächere Verbindungen gefunden. Um eine mögliche Verbindung zwischen zwei Geräten zu identifizieren, wird insbesondere ein Korrelationskoeffizient zwischen den beiden Geräten bestimmt. Diese Korrelationskoeffizienten können mit einer zweidimensionalen Matrix, der sogenannten Korrelationstabelle, gespeichert werden, wobei der mit (i, j) indizierte Wert die Korrelation zwischen den Knoten i und j beschreibt. Der Korrelationskoeffizient zwischen einem untergeordneten Knoten und seinem übergeordneten Knoten zeigt die Fähigkeit des untergeordneten Knotens, die Veränderung in der Wirkleistung eines übergeordneten Geräts zu erklären. Beispielsweise (X, Y) kann eine mögliche Kante im Graphen sein, wobei X der übergeordnete Knoten und Y der untergeordnete Knoten ist. Es kann dann ein neues Signal Z=X+-Y als das sogenannte Elternsignal X definiert werden, das keinen Einfluss mehr auf Y hat, wobei das Vorzeichen durch die Minimierung der Varianz gefunden wird. Dann kann insbesondere der Korrelationskoeffizient, insbesondere als absolute Abweichung, wie folgt definiert werden:

$$corr(X, Y) = E(|X - E(X)|) - E(|Z - E(Z)|)$$

Wenn X und Y unabhängig und identisch verteilt sind, dann ist der Korrelationskoeffizient minimiert. Wenn die Korrelation "perfekt" ist, das heißt X = Y, dann ist der Korrelationskoeffizient maximiert. Dieser Korrelationskoeffizient wird mehrmals insbesondere über kurze Zeiträume, beispielsweise 75 Minuten, berechnet. Dies führt zu einer Liste lokaler Korrelationen für jedes Paar von Zeitreihen. Der globale Korrelationskoeffizient des Zeitreihenpaars kann beispielsweise der Mittelwert der zehn höchsten Korrelationskoeffizienten sein. Durch Anwendung dieser wiederholten, kurzen Berechnung des Korrelationskoeffizienten wird die Berücksichtigung zu vieler Korrelationen vermieden. Bei alternativen Implementierungen können auch andere Korrelationskoeffizienten, wie der Pearson-Koeffizient, die normalisierte kreuzweise Leistungsspektraldichte, die gegenseitige Information oder die erklärte Varianzabweichung, verwendet werden.

Dabei ist insbesondere zu beachten, dass der schrittweise Algorithmus zunächst auch mehrere potenzielle/plausible Topologien finden kann. Es kann dabei bei einem oder mehreren Schritten zu einer Mehrdeutigkeit bezüglich der neu zu bindenden Verbindungen kommen. Zum Beispiel könnten zwei Verbindungen relevant sein. In diesem Fall würden entsprechend zwei divergierende Topologien erstellt werden, die erste mit einem ersten neuen Link und die zweite mit dem anderen Link. Am Ende des Prozesses können dann mehrere verschiedene Topologien erhalten werden, die in einem Satz von Topologien gespeichert sind. Es kann dann im Nachhinein über ein globales Kriterium, beispielsweise um die beste Topologie in der Menge zu finden, eine entsprechende Topologie ausgewählt werden. Als Kriterium kann beispielsweise angesehen werden, wie geschlossen die Energiebilanzen der jeweiligen Verzweigungen sind Dies kann sowohl manuell, beispielsweise durch einen Nutzer, durchgeführt werden oder auch automatisiert, entsprechend durch vorgegebene Kriterien.

Dabei kann der Algorithmus beispielsweise auch auf fehlende Geräte, fehlende Daten, Ausreißer sowie Rauschen entsprechend reagieren. Selbst wenn die Ergebnisse unsicher sind, kann davon ausgegangen werden, dass es besser ist, nichts vorherzusagen. Außerdem kann eine systematische Auskunft über die Zuverlässigkeit der Vorhersage gegeben werden. Aus diesem Grund ist das vorgeschlagene Verfahren im Gegensatz zum Stand der Technik viel flexibler und kann insbesondere auch mit fehlerhaften und unvollständigen Daten umgehen. Ferner kann auch der Grad der Unsicherheit einer Vorhersage quantifiziert werden, beispielsweise durch eine farbliche Gestaltung der Knoten in einer angezeigten Darstellung der Netzwerktopologie. Dies ermöglicht es einem menschlichen Experten, das Ergebnis schnell zu beurteilen und gegebenenfalls teilweise zu korrigieren. Weiterhin kann der beschriebene Algorithmus beziehungsweise das beschriebene Verfahren auch auf verschiedene Teile der Zeitreihe angewendet werden, um Änderungen in der Topologie zu erkennen. Dies kann auch als Fehlererkennungsmechanismus verwendet werden, um zum Beispiel Stromdiebstahl, Druckverluste in Luftkompressionssystemen oder Wasserverluste in Hydrauliksystemen zu erkennen.

Gemäß einer vorteilhaften Ausgestaltungsform werden Erfassungseinrichtungen unterhalb eines vorgegebenen Entropieschwellwerts beim Bestimmen der Netzwerktopologie unberücksichtigt. Mit anderen Worten können Erfassungseinrichtungen unterhalb des vorgegebenen Entropieschwellwerts vernachlässigt werden. Dies hat den Vorteil, dass die Netzwerktopologie lediglich Erfassungseinrichtungen und somit beispielsweise elektrische Komponenten berücksichtigt, welche oberhalb des Entropieschwellwerts sind. Somit kann eine zu komplizierte Strukturbestimmung der Netzwerktopologie entsprechend verhindert werden.

Dabei kann insbesondere vorgesehen sein, dass eine Entropieschwelle berechnet wird. Dabei werden hauptsächlich Korrelationen betrachtet und können daher auch mit falsch parametrierten Zählern wie z.B. Messwerte in Megawatt anstatt in Watt umgewandelt werden, wodurch auch mit sehr kleinen Zahlen entsprechend gearbeitet werden kann.

Weiterhin vorteilhaft ist, wenn Entropien über einen vorgesehenen Zeitraum bestimmt und korreliert werden. Dies ermöglicht insbesondere, dass zufällige Korrelationen ausgeschlossen werden können. Beispielsweise kann ein vorgesehener Zeitraum 75 Minuten betragen. Innerhalb der 75 Minuten kann es dabei vorkommen, dass unabhängige Erfassungseinrichtungen dennoch zufällig zusammen eine entsprechende Wirkleistung ausgeben. Um nun eine Korrelation der unabhängigen Wirkleistungen auszuschließen, kann über einen vorgegebenen Zeitraum beobachtet werden, sodass zufällige Abhängigkeiten und Korrelationen geringer gewichtet werden und somit im Wesentlichen beim Bestimmen der Netzwerktopologie im Nachhinein vernachlässigt werden. Somit können zufällige Korrelationen verhindert werden und dadurch die Netzwerktopologie verbessert bestimmt werden.

Eine weitere vorteilhafte Ausgestaltungsform sieht vor, dass Mutter-Kind Abhängigkeiten der Erfassungseinrichtung als Abhängigkeiten bestimmt werden. Beispielsweise beeinflusst ein Energieverbrauch der "Kinderfassungseinrichtung" auch die "Muttererfassungseinrichtung", was umgekehrt nicht der Fall sein muss beziehungsweise der Fall ist. Somit können entsprechende Mutter-Kind Abhängigkeiten bestimmt werden und auf Basis dessen wiederum insbesondere eine Baumtopologie beziehungsweise Graphentopologie erzeugt werden. Somit kann einfach aufbereitet für einen Nutzer die entsprechende Netzwerktopologie bereitgestellt werden.

Ebenfalls vorteilhaft ist, wenn erst bei einem Überschreiten eines vorgegeben Korrelationswerts von jeweiligen Erfassungseinrichtungen eine Abhängigkeit bestimmt wird. Beispielsweise kann erst, wenn ein Korrelationswert von größer als 90 ermittelt wird, eine entsprechende Abhängigkeit festgestellt werden. Somit können zufällige Korrelationen ausgeschlossen werden beziehungsweise zufällige Korrelationen nicht als entsprechende Abhängigkeiten dargestellt werden. Dies ermöglicht eine detaillierte Bestimmung der Netzwerktopologie.

Eine weitere vorteilhafte Ausgestaltungsform sieht vor, dass den bestimmten Abhängigkeiten ein jeweiliger Vertrauenswert für die Abhängigkeiten zugewiesen wird. Beispielsweise kann der Korrelationswert entsprechend als Vertrauenswert umgewandelt werden. Somit können entsprechende Vertrauenswerte mitangezeigt werden, sodass ein Nutzer auf einfache Art und Weise sehen kann, wie hoch das Vertrauen der entsprechenden Abhängigkeit ist. Dies kann beispielsweise in Prozentzahlen mit an einem dargestellten Knoten angegeben werden oder auch beispielsweise farblich oder durch andere Symbole dargestellt werden. Somit ist es für einen Nutzer auf einfache Art und Weise ermöglicht, auch entsprechende Vertrauenswerte bezüglich der Abhängigkeiten zu erhalten.

Es hat sich weiterhin als vorteilhaft erwiesen, wenn eine Vielzahl von potentiellen Netzwerktopologien zur Auswahl durch eine Person bestimmt wird und/oder in Abhängigkeit von weiteren Entropien/Messwerten über weitere Zeitschritte zumindest eine Netzwerktopologie aus der Vielzahl von bestimmten Netzwerktopologien bestimmt wird. Somit ist es ermöglicht, dass auch Mehrdeutigkeiten in beispielsweise einem ersten Iterationsschritt zugelassen werden. Es kann dann vorgesehen sein, dass in einem zweiten Iterationsschritt entweder manuell durch eine Person, insbesondere durch das Erfassen einer Eingabe durch die Person, Netzwerktopologien, welche ausgeschlossen sind, entsprechend entfernt werden. Ferner kann automatisch, beispielsweise über weitere Zeitschritte, eine Adaption beziehungsweise das Ausschließen von weiteren Netzwerktopologien durchgeführt werden, bis eine Netzwerktopologie identifiziert wurde, welche der tatsächlichen Netzwerktopologie im Wesentlichen entspricht. Somit kann automatisch die Netzwerktopologie bestimmt werden.

Es hat sich weiterhin als vorteilhaft erwiesen, wenn bestimmte redundante Abhängigkeiten in der Netzwerktopologie eliminiert werden. Insbesondere können somit redundante Topologien in einer neuen aktuellen Menge von Topologien gelöscht werden. Redundante Topologien können dadurch entstehen, dass beispielsweise einem Knoten C das Signal A und danach B zugewiesen wird und in einer parallelen Netzwerktopologie dem Knoten C erst B und danach A zugewiesen wird. Diese Topologien sind gleich, und daher kann das Verfahren mit nur einer dieser redundanten Topologien fortgeführt werden. Somit kann konvergierend die korrekte Netzwerktopologie bestimmt werden.

Ferner hat es sich als vorteilhaft erwiesen, wenn Ausreißer beim Bestimmen der Abhängigkeiten eliminiert werden. Insbesondere kann es auch bei den Erfassungseinrichtungen zu entsprechenden Ausreißern kommen. Diese Ausreißer sind im Wesentlichen jedoch nicht zu berücksichtigen, sodass diese entsprechend aus der Bestimmung der Netzwerktopologie auszuschließen sind.

In einer weiteren vorteilhaften Ausgestaltungsform ist vorgesehen, dass Energieerzeuger und Energieverbraucher als jeweilige elektrische Komponenten beim Bestimmen der Netzwerktopologie berücksichtigt werden. Insbesondere können somit die Erfassungseinrichtungen als im Wesentlichen Energiezähler ausgebildet sein, welche sowohl positiven Energiezufluss beziehungsweise Energieabfluss verzeichnen können. Sollte beispielsweise eine entsprechende Komponente in dem Netzwerk als Energieverbraucher ausgegeben werden, so kann lediglich ein elektrischer Energieverbrauch dort als korrekter Messwert bestimmt werden und in Korrelation gebracht werden. Sollte es sich jedoch bei der Komponente um Energieerzeuger handeln, so kann lediglich eine positive Energieerzeugung als Messwert berücksichtigt werden. Somit kann die Netzwerktopologie zuverlässig bestimmt werden.

In einer weiteren vorteilhaften Ausgestaltungsform ist vorgesehen, dass als Netzwerktopologie ein Netzwerkbaum erzeugt wird. Der Normalwertebereich kann auch als entsprechender Graph bezeichnet werden. Insbesondere der Graph bildet, berücksichtigt durch eine Haupterfassungseinrichtung, eine entsprechende Baumstruktur beziehungsweise Graphenstruktur. Diese kann einfach dargestellt werden, wodurch einem Nutzer auf einfache Art und Weise die Netzwerkstruktur bereitgestellt werden kann. Insbesondere kann als Knoten dann wiederum eine entsprechende Erfassungseinrichtung vorgesehen sein und als Kante eine entsprechende Verbindung zwischen einzelnen Erfassungseinrichtungen.

Es hat sich weiterhin als vorteilhaft erwiesen, wenn das Verfahren in vorgegebenen Zeitabständen wiederholt wird und die ursprünglich bestimmte Netzwerktopologie adaptiert wird. Beispielsweise kann somit auch eine Anpassung innerhalb des Netzwerks berücksichtigt werden. Sollten beispielsweise neuen Energieverbraucher beziehungsweise neue Erfassungseinrichtungen sowie neue Energieerzeuger beziehungsweise Erfassungseinrichtungen in die Netzwerktopologie verbaut werden, so kann dies auch berücksichtigt werden. Mit anderen Worten findet eine im Wesentlichen in Echtzeit stattfindende Adaption der Netzwerktopologie statt, sodass auch flexibel die Netzwerktopologie bestimmt werden kann.

Bei dem vorgestellten Verfahren handelt es sich insbesondere um ein computerimplementiertes Verfahren. Daher betrifft ein weiterer Aspekt der Erfindung auch ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft auch ein computerlesbares Speichermedium mit dem Computerprogrammprodukt nach dem vorhergehenden Aspekt.

Weiterhin betrifft die Erfindung auch eine elektronische Recheneinrichtung zum Bestimmen einer Netzwerktopologie für elektrische Komponenten in einem elektrischen Netzwerk, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung kann weiterhin dazu ausgebildet sein, Steuersignale zu erzeugen, um beispielsweise die elektrischen Komponenten, insbesondere über die Ansteuerung der Erfassungseinrichtung, beispielsweise aus der Netzwerktopologie zu entfernen beziehungsweise hinzuzufügen. Somit kann in Ergänzung zum Bestimmen der Netzwerktopologien diese dazu genutzt werden, um entsprechende Steuerungen des Netzwerks durchzuführen.

Vorteilhafte Ausgestaltungsformen des Verfahrens sind als vorteilhafte Ausgestaltungsformen des Computerprogrammprodukts, des computerlesbaren Speichermediums, des Computerprogrammprodukts sowie der elektronischen Recheneinrichtung anzusehen. Die elektronische Recheneinrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle (LUT) durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme. Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

Fig. 1    ein schematisches Blockschaltbild gemäß einer Ausführungsform eines Netzwerks mit elektrischen Komponenten, Erfassungsein-

richtungen und einer elektronischen Rechen-einrichtung; und

Fig. 2 eine schematische Graphendarstellung einer potenziellen Netzwerktopologie.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

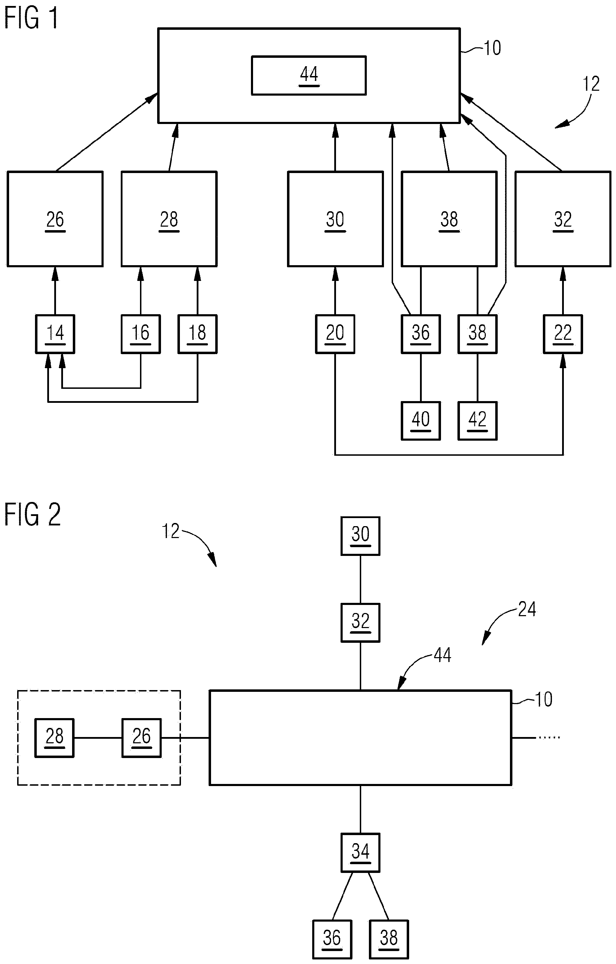

Fig. 1 zeigt ein schematisches Blockschaltbild gemäß einer Ausführungsform einer elektronischen Recheneinrichtung 10 zum Bestimmen einer Netzwerktopologie 12 für elektrische Komponenten 14, 16, 18, 20, 22, 40, 42 in einem elektrischen Netzwerk 24 (Fig. 2). Dabei ist insbesondere vorgesehen, dass den elektrischen Komponenten 14, 16, 18, 20, 22, 40, 42 jeweilige Erfassungseinrichtungen 26, 28, 30, 32, 34, 36, 38 zugeordnet sind.

Beispielsweise zeigt die Fig. 1, dass die elektrische Komponente 14 der Erfassungseinrichtung 26 zugeordnet ist. Des Weiteren sind den Komponenten 16, 18 die Erfassungseinrichtung 28 zugeordnet. Es kann beispielsweise sein, dass die Komponenten 16, 18 als Untergruppe zur Komponente 14 ausgebildet sind. Mit anderen Worten sind die Komponenten 16, 18 Kinder der Komponente 14. Mit anderen Worten ist die Komponente 14 eine Mutter für die Komponenten 16, 18. Des Weiteren zeigt die Fig. 1, dass der Komponente 20 eine Erfassungseinrichtung 30 zugeordnet ist. Der Komponente 22 ist wiederum eine Erfassungseinrichtung 32 zugeordnet. Die Komponente 20 kann wiederum ein Kind der Komponente 22 sein.

Ferner zeigt die Fig. 1 noch, dass zwei Komponenten 40, 42 vorgesehen sind. Der Komponente 40 ist eine Erfassungseinrichtung 36 zugeordnet, und der Komponente 42 ist eine Erfassungseinrichtung 38 zugeordnet. Die Erfassungseinrichtungen 36, 38 können dann wiederum an eine gemeinsame Erfassungseinrichtung 34 angeheftet werden. Ferner zeigt die Fig. 1, dass die elektronische Recheneinrichtung 10 beispielsweise eine Gesamterfassungseinrichtung 44 aufweist, welche eine Gesamtentropie im gesamten Netzwerk erfasst. Die Erfassungseinrichtungen 26, 28, 30, 32, 34, 36, 38 wiederum können ihre entsprechenden Entropien beziehungsweise Messwerte an die elektronische Recheneinrichtung 10 übermitteln.

Erfindungsgemäß ist insbesondere vorgesehen, dass die jeweiligen elektrischen Entropien an den jeweiligen Erfassungseinrichtungen 26, 28, 30, 32, 34, 36, 38 im elektrischen Netzwerk über eine Vielzahl von Zeitschritten empfangen beziehungsweise bestimmt werden. Es erfolgt dann das Korrelieren von jeweiligen Erfassungseinrichtungen 26, 28, 30, 32, 34, 36, 38 in Abhängigkeit von den Entropien über die Vielzahl von Zeitschritten. Es werden dann entsprechende Abhängigkeiten der Erfassungseinrichtungen 26, 28, 30, 32, 34, 36, 38 zueinander in Abhängigkeit von der Korrelation bestimmt, und es erfolgt das Bestimmen der Netzwerktopologie 12 in Abhängigkeit von den bestimmten Abhängigkeiten.

Dabei ist insbesondere vorgesehen, dass Erfassungseinrichtungen 26, 28, 30, 32, 34, 36, 38 unterhalb eines vorgegebenen Entropieschwellwerts beim Bestimmen der Netzwerktopologie 12 unberücksichtigt werden/bleiben. Ferner werden Entropien über einen vorgesehenen Zeitraum bestimmt und korreliert.

Des Weiteren zeigt die Fig. 1, dass insbesondere über Mutter-Kind Abhängigkeiten der Erfassungseinrichtungen 26, 28, 30, 32, 34, 36, 38 als Abhängigkeiten bestimmt werden.

Des Weiteren ist vorgesehen, dass erst bei einem Überschreiten eines vorgegeben Korrelationswerts von jeweiligen Erfassungseinrichtungen 26, 28, 30, 32, 34, 36, 38 eine Abhängigkeit bestimmt wird. Des Weiteren kann in den bestimmten Abhängigkeiten ein jeweiliger Vertrauenswert für die Abhängigkeiten zugewiesen werden.

Weiterhin kann vorgesehen sein, dass eine Vielzahl von potentiellen Netzwerktopologien 12 zur Auswahl durch eine Person bestimmt werden und/oder in Abhängigkeit von weiteren Entropien über weitere Zeitschritte zumindest eine Netzwerktopologie 12 aus der Vielzahl von bestimmten Netzwerktopologien 12 bestimmt wird.

Weiterhin kann vorgesehen sein, dass bestimmte redundante Abhängigkeiten in der Netzwerktopologie 12 eliminiert werden. Des Weiteren können Ausreißer beim Bestimmen der Abhängigkeiten eliminiert werden.

Weiterhin kann vorgesehen sein, dass Energieerzeuger und Energieverbraucher als jeweilige elektrische Komponenten 14, 16, 18, 20, 22, 40, 42 beim Bestimmen der Netzwerktopologie 12 berücksichtigt werden. Des Weiteren kann das Verfahren in vorgegebenen Zeitabständen wiederholt und die ursprünglich bestimmte Netzwerktopologie 12 adaptiert werden.

Fig. 2 zeigt insbesondere eine entsprechende Netzwerktopologie 12 aus der Fig. 1. Im vorliegenden Ausführungsbeispiel ist insbesondere gezeigt, dass die Netzwerktopologie 12 als Graph beziehungsweise als Netzwerkbaum dargestellt werden kann. Die Fig. 2 zeigt ferner, dass auch noch weitere Netzwerktopologien beziehungsweise weitere Komponenten im Nachhinein hinzugefügt werden können, was insbesondere optional durch die Punkte dargestellt ist.

Des Weiteren zeigt die Fig. 2, dass beispielsweise die Abhängigkeiten der Komponenten 14, 16 und 18 lediglich dahingehend ausgewertet werden können, dass die Erfassungseinrichtungen 26 und 28 miteinander korrelieren, jedoch nicht, dass die einzelnen Komponenten 16 und 18 als Untergruppe zur Komponente 14 anzusehen sind.

Insbesondere zeigen somit die Figuren, dass in einem ersten Schritt eine Vorprozessierung stattfindet. Insbesondere können dabei nicht informative Erfassungseinrichtungen 26, 28, 30, 32, 34, 36, insbesondere unterhalb eines Entropieschwellwerts, ausgeschlossen werden. Beispielsweise können Knoten mit einer normalisierten Entropie von weniger als 0,05 Watt eliminiert werden und nicht Teil der dargestellten Netzwerktopologie 12 werden.

In einem zweiten Schritt kann insbesondere ein sogenannter Wurzelknoten als Hauptzähler vorgegeben werden.

In einem dritten Schritt erfolgt das Erzeugen einer Vielzahl von Netzwerktopologien 12. Während einige Knoten nicht miteinander verbunden sind, kann in jedem Schritt für eine Netzwerktopologie 12 in der Menge von den Netzwerktopologien 12 mehrere Knotenpaare $(X_1, Y_1), (X_2, Y_2), ..., (X_k, Y_k)$ mit $X_1, X_2, ... , X_k$ ausgewählt werden, die bereits in der Topologie verbunden sind und $Y_1, Y_2, ... , Y_k$ noch freie Knoten sind. Diese Knotenpaare haben wiederum einen Korrelationskoeffizienten von beispielsweise mehr als 90% des Maximalwerts in der Korrelationsmatrix. Es können dann k neue divergierende Topologien erstellt werden, wobei jede eine zusätzliche Kante hat, die einem der k möglichen vorherigen Paare entspricht und der neuen Menge von Netzwerktopologien 12 hinzugefügt wird. Für diese neue Netzwerktopologie 12 kann ein Signal geändert werden, um den Einfluss zu eliminieren, und die Korrelationsmatrix wird entsprechend aktualisiert:

$$ X_i \leftarrow X_i \mp Y_i $$

wobei das Vorzeichen so gewählt wird, dass die Varianz des aktualisierten Signals minimiert wird. Schließlich werden redundante Topologien im neuen aktuellen Satz von Netzwerktopologien 12 gelöscht. Redundante Topologien können dadurch entstehen, dass das Signal A und danach B einem Knoten C zugewiesen werden und in einer parallelen Topologie B und danach A dem Knoten C zugewiesen werden. Diese Topologien sind gleich, und daher kann der Algorithmus mit nur einer dieser redundanten Topologien fortgeführt werden.

In einem nächsten Schritt erfolgt dann das Ranking der Netzwerktopologien 12. Dabei kann zunächst ein Energierückgewinnungsscore für jeden Wurzelknoten im Netzwerk definiert werden, der misst, inwieweit die entsprechenden Kinderknoten in der Lage sind, das Wurzelsignal zu kompensieren, mit anderen Worten, inwieweit der Wurzelknoten das erste Kirchhoffsche Gesetz beziehungsweise die Energieerhaltung erfüllt. X kann dabei das Anfangssignal eines Wurzelknotens r und Z das Eingangssignal von r sein, das man durch eine algebraische Summe erhält, die die Varianz des Signals minimiert. Dann ist die Punktzahl der Wurzel wie folgt definiert:

$$ score(r) = E(|X - E(X)|) - E(|Z - E(Z)|) $$

Folglich kann die Gesamtbewertung der Netzwerktopologie 12 (nachfolgend auch als $\tau$ bezeichnet) mit ihren Wurzelknoten definiert werden als

$$ score(\tau) = \sum_{r \in R} score(r) $$

Schließlich wird die resultierende Menge von Netzwerktopologien 12 sortiert, um den besten Kandidaten zu finden. Die ausgewählte Netzwerktopologie 12 ist diejenige mit der höchsten Punktzahl.

In einer alternativen Implementierung kann auch ein menschlicher Experte die besten automatisch definierten Netzwerktopologien 12 auch manuell vergleichen und diejenige auswählen, die am geeignetsten erscheint.

In einem weiteren Schritt ist es ermöglicht, eine vorhergesagte Netzwerktopologie 12 zu erhalten. Insbesondere in einem Schritt "Pruning" können entsprechende "Blätter" ausgeschlossen werden, die nicht wesentlich zur Energiebilanz des Netzes beitragen. Wenn die Energierückgewinnung des Wurzelknotens ohne das Blatt höher ist, wird dieses entfernt und es wird ausgeschlossen, insbesondere ein sogenannter Ausreißerknoten bestimmt.

Ferner können unterschiedliche Kriterien zur Bewertung der Qualität der endgültigen Bestimmung der Netzwerktopologie 12 bestimmt werden. Beispielsweise kann die Genauigkeitsrate der Netzwerktopologie 12 als Prozentsatz der richtigen Wege zwischen jedem Knoten im Netz und dem Hauptzähler bestimmt werden. Weiterhin kann auch ein Vertrauenswert als Prozentsatz der richtigen Pfade zwischen jedem Knoten im Diagramm, das bedeutet insbesondere, dass ausgeschlossenen Knoten nicht berücksichtigt werden, und dem Hauptzähler bestimmt werden. Weiterhin kann auch ein qualitatives Kriterium, das auf der Entropie basiert, verwendet werden, um den Graphen mit beispielsweise Farben darzustellen, die die stärkste der Einzelverbindungen anzeigen. Ferner können auch individuelle Werte der Wurzeln die Fähigkeit der Topologie zeigen, die Ungleichgewichte des Netzes zu finden.

Bezugszeichenliste

| | |
|---|---|
| 10 | elektronische Recheneinrichtung |
| 12 | Netzwerktopologie |
| 14 | Komponente |
| 16 | Komponente |
| 18 | Komponente |
| 20 | Komponente |
| 22 | Komponente |
| 24 | elektrisches Netzwerk |

26    Erfassungseinrichtung
28    Erfassungseinrichtung
30    Erfassungseinrichtung
32    Erfassungseinrichtung
34    Erfassungseinrichtung
36    Erfassungseinrichtung
38    Erfassungseinrichtung
40    Komponente
42    Komponente
44    Gesamterfassungseinrichtung

**Patentansprüche**

1. Verfahren zum Bestimmen einer Netzwerktopologie (12) für elektrische Komponenten (14, 16, 18, 20, 22, 40, 42) in einem elektrischen Netzwerk (24) mittels einer elektronischen Recheneinrichtung (10), mit den Schritten:

   - Empfangen einer jeweiligen elektrischen Entropie an jeweiligen Erfassungseinrichtungen (26, 28, 30, 32, 34, 36, 38) im elektrischen Netzwerk (24) über eine Vielzahl von Zeitschritten;
   - Korrelieren von jeweiligen Erfassungseinrichtungen (26, 28, 30, 32, 34, 36, 38) in Abhängigkeit von den Entropien über die Vielzahl von Zeitschritten;
   - Bestimmen von Abhängigkeiten der Erfassungseinrichtungen (26, 28, 30, 32, 34, 36, 38) zueinander in Abhängigkeit von der Korrelation; und
   - Bestimmen von zumindest einer Netzwerktopologie (12) in Abhängigkeit von den bestimmten Abhängigkeiten.

2. Verfahren nach Anspruch 1, **dadurch gekennzeichnet, dass** Erfassungseinrichtungen (26, 28, 30, 32, 34, 36, 38) unterhalb eines vorgegebenen Entropieschwellwerts beim Bestimmen der Netzwerktopologie (12) unberücksichtigt werden.

3. Verfahren nach Anspruch 1 oder 2, **dadurch gekennzeichnet, dass** Entropien über einen vorgesehenen Zeitraum bestimmt und korreliert werden.

4. Verfahren nach einem der vorhergehenden Ansprüche, **dadurch gekennzeichnet, dass** Mutter-Kind Abhängigkeiten der Erfassungseinrichtungen (26, 28, 30, 32, 34, 36, 38) als Abhängigkeiten bestimmt werden.

5. Verfahren nach einem der vorhergehenden Ansprüche, **dadurch gekennzeichnet, dass** erst bei einem Überschreiten eines vorgegeben Korrelationswerts von jeweiligen Erfassungseinrichtungen (26, 28, 30, 32, 34, 36, 38) eine Abhängigkeit bestimmt wird.

6. Verfahren nach einem der vorhergehenden Ansprüche, **dadurch gekennzeichnet, dass** den bestimmten Abhängigkeiten ein jeweiliger Vertrauenswert für die Abhängigkeiten zugewiesen wird.

7. Verfahren nach einem der vorhergehenden Ansprüche, **dadurch gekennzeichnet, dass** eine Vielzahl von potentiellen Netzwerktopologien (12) zur Auswahl durch eine Person bestimmt werden und/oder in Abhängigkeit von weiteren Entropien über weitere Zeitschritte zumindest eine Netzwerktopologie (12) aus der Vielzahl von bestimmten Netzwerktopologien (12) bestimmt wird.

8. Verfahren nach einem der vorhergehenden Ansprüche, **dadurch gekennzeichnet, dass** bestimmte redundante Abhängigkeiten in der Netzwerktopologie (12) eliminiert werden.

9. Verfahren nach einem der vorhergehenden Ansprüche, **dadurch gekennzeichnet, dass** Ausreißer beim Bestimmen der Abhängigkeiten eliminiert werden.

10. Verfahren nach einem der vorhergehenden Ansprüche, **dadurch gekennzeichnet, dass** Energieerzeuger und Energieverbraucher als jeweilige elektrische Komponenten (14, 16, 18, 20, 22, 40, 42) beim Bestimmen der Netzwerktopologie (12) berücksichtigt werden.

11. Verfahren nach einem der vorhergehenden Ansprüche, **dadurch gekennzeichnet, dass** als Netzwerktopologie (12) ein Netzwerkbaum erzeugt wird.

12. Verfahren nach einem der vorhergehenden Ansprüche, **dadurch gekennzeichnet, dass** das Verfahren in vorgegebenen Zeitabständen wiederholt wird und die ursprünglich bestimmte Netzwerktopologie (12) adaptiert wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Bestimmen einer Netzwerktopologie (12) für elektrische Komponenten (14, 16, 18, 20, 22, 40, 42) in einem elektrischen Netzwerk (24), wobei die elektronische Recheneinrichtung (10) zum Durchführen eines Verfahrens nach einem der Ansprüche 1 bis 12 ausge-

bildet ist.

FIG 1

FIG 2

Europäisches
Patentamt

European
Patent Office

Office européen
des brevets

# EUROPÄISCHER RECHERCHENBERICHT

**Nummer der Anmeldung**

EP 24 17 1879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 113 937 764 A (METERING CENTER OF STATE GRID JIBEI ELECTRIC POWER COMPANY LTD ET AL.) 14. Januar 2022 (2022-01-14) | 1,3-15 | INV. H02J13/00 |
| Y | * Seiten 1-8; Abbildung 1 * ----- | 2 | |
| Y | CN 113 094 862 A (UNIV SHANGHAI SCIENCE & TECH) 9. Juli 2021 (2021-07-09) * Absätze [0025] - [0028] * ----- | 2 | |
| Y | CN 116 865 258 B (ELECTRIC POWER RES INST STATE GRID JIBEI ELECTRIC POWER CO LTD ET AL.) 5. Dezember 2023 (2023-12-05) * Absatz [0058] * ----- | 2 | |
| A | WO 2015/074326 A1 (STATE GRID CORP CHINA [CN] ET AL.) 28. Mai 2015 (2015-05-28) * Seiten 3,4 * ----- | 9 | |
| A | US 11 388 044 B1 (LAU CHI LEUNG [US] ET AL) 12. Juli 2022 (2022-07-12) * Spalten 1-24; Abbildungen 1/23-23/23 * ----- | 1-15 | **RECHERCHIERTE SACHGEBIETE (IPC)** |
| A | CN 111 654 392 A (ELECTRIC POWER SCIENT RES INST STATE GRID ZHEJIANG ELECTRIC POWER CO L) 11. September 2020 (2020-09-11) * Seiten 1-9; Abbildungen 1,2 * ----- | 1-15 | H02J |
| A | CN 117 154 679 A (UNIV TIANJIN) 1. Dezember 2023 (2023-12-01) * Seiten 1-12; Abbildungen 1-7 * ----- | 1-15 | |

-/--

Der vorliegende Recherchenbericht wurde für alle Patentansprüche erstellt

| Recherchenort | Abschlußdatum der Recherche | Prüfer |
|---|---|---|
| München | 17. Oktober 2024 | Krasser, Bernhard |

Seite 1 von 2

Europäisches
Patentamt

European
Patent Office

Office européen
des brevets

# EUROPÄISCHER RECHERCHENBERICHT

**Nummer der Anmeldung**

EP 24 17 1879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HUY NGUYEN ET AL: "A Binary Independent Component Analysis Approach to Tree Topology Inference", IEEE TRANSACTIONS ON SIGNAL PROCESSING, IEEE, USA, Bd. 61, Nr. 12, 1. Juni 2013 (2013-06-01), Seiten 3071-3080, XP011510920, ISSN: 1053-587X, DOI: 10.1109/TSP.2013.2254476 * Seite 1 - Seite 10 * | 1-15 | |
| A | FILIPPO RADICCHI ET AL: "Maximum entropy sampling in complex networks", ARXIV.ORG, CORNELL UNIVERSITY LIBRARY, 201 OLIN LIBRARY CORNELL UNIVERSITY ITHACA, NY 14853, 10. März 2017 (2017-03-10), XP080756231, * Seite 1 - Seite 15 * | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 17. Oktober 2024 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 1879

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2024

| Im Recherchenbericht angeführtes Patentdokument | Datum der Veröffentlichung | Mitglied(er) der Patentfamilie | Datum der Veröffentlichung |
|---|---|---|---|
| CN 113937764 A | 14-01-2022 | KEINE | |
| CN 113094862 A | 09-07-2021 | KEINE | |
| CN 116865258 B | 05-12-2023 | KEINE | |
| WO 2015074326 A1 | 28-05-2015 | CN 103595137 A<br>WO 2015074326 A1 | 19-02-2014<br>28-05-2015 |
| US 11388044 B1 | 12-07-2022 | KEINE | |
| CN 111654392 A | 11-09-2020 | KEINE | |
| CN 117154679 A | 01-12-2023 | KEINE | |

EPO FORM P0461

Für nähere Einzelheiten zu diesem Anhang : siehe Amtsblatt des Europäischen Patentamts, Nr.12/82